# EUROPEAN PATENT APPLICATION

(11) **EP 4 644 186 A1**
(43) Date of publication of application: **05.11.2025**
(21) Application number: 23911266.7
(22) Date of filing: 30.08.2023
(51) Int. Cl.: B60R 11/02, B62D 49/00, B60R 16/02

(54) **WORK VEHICLE**

(30) Priority: 27.12.2022 JP 2022210898
(71) Applicant: Kubota Corporation, Osaka 556-8601 (JP)
(72) Inventor: YAMAGUCHI, Tatsuya, Sakai-shi, Osaka 590-0908 (JP); OGURI, Takefumi, Sakai-shi, Osaka 590-0908 (JP); MANTOKU, Naoto, Sakai-shi, Osaka 590-0908 (JP); MITSUI, Haruki, Sakai-shi, Osaka 590-0908 (JP)
(74) Representative: Schlegel, Sebastian
(86) International application number: PCT/JP2023/031401
(87) International publication number: WO 2024/142482

(57) **Abstract**

A work vehicle includes a traveling device 1; a vehicle body 2 that is supported by the traveling device 1; and a communication unit 8 configured to transmit information on the vehicle body 2 to an outside, in which the communication unit 8 is provided at a position where at least a part of the communication unit 8 is exposed from the vehicle body 2 to the outside.(Fig. 1)

## Description

### Technical Field

The present invention relates to a work vehicle including a communication unit that transmits information of a vehicle body to the outside.

### Background Art

Patent Literature 1 discloses a passenger work vehicle in which a communication device that transmits information collected by the passenger work vehicle to a management center or the like at a remote location is provided inside a hood.

### Citation List

Patent Literature 1: Japanese Patent Application Publication No. JP 2020-19353 A

### Summary of Invention

### Technical Problem

In a case where the communication device is described in Patent Literature 1, since the communication device is inside the hood, the communication device is protected by the hood, but there is a possibility that a communication state is degraded due to the attenuation of electromagnetic waves, and there is a possibility that measures such as increasing the intensity of the electromagnetic waves are required.

An object of the present invention is to provide a work vehicle in which a communication unit having a simple configuration is installed at a location where a communication state is good.

### Solution to Problem

A feature of a work vehicle according to the present invention is that the work vehicle includes a traveling device; a vehicle body supported by the traveling device; and a communication unit configured to transmit information on the vehicle body to an outside, in which the communication unit is provided at a position where at least a part of the communication unit is exposed from the vehicle body to the outside.

According to the present configuration, since the communication unit is provided at a position where at least a part of the communication unit is exposed from the vehicle body to the outside, it is possible to improve a communication state of the communication unit. That is, the communication unit is able to be installed in the work vehicle while the communication state is good.

In the present invention, the communication unit is preferably provided at a position where the vehicle body not overlapping with the communication unit from above.

According to the present configuration, it is possible to further improve the communication state of the communication unit.

In the present invention, the vehicle body preferably includes a driving unit having a driving seat, and the communication unit is preferably provided rearward of the driving seat.

Depending on the installation location of the communication unit, a field of view of the driver may be obstructed during driving. According to the present configuration, since the communication unit is located rearward of the driving seat, the field of view of the driver is not obstructed during driving.

In the present invention, an outer end portion of the communication unit is preferably located outward of an outer end portion of the driving seat in a vehicle body right-left direction.

According to the present configuration, the driving seat is less likely to hinder the communication of the communication unit, and it is possible to improve the communication state of the communication unit.

In the present invention, the work vehicle preferably further includes a control device provided in the driving unit; and a wire harness configured to connect the control device and the communication unit, in which the control device is preferably provided forward of the communication unit, the wire harness is preferably extended from the control device to the rear side of the driving seat through below the driving unit, and is preferably connected to the communication unit, a connector is preferably provided in a portion of the wire harness that is located rearward of the driving unit, and the wire harness is preferably separable into a portion on a control device side and a portion on a communication unit side.

According to the present configuration, the wire harness that connects the control device and the communication unit spaced apart from each other in the front and rear is able to be arranged without being exposed to the outside by using the space below the driving unit, and since the connector is provided at a position (rear portion of the driving unit) which is easy to access from the rear of the vehicle body and close to the communication unit, it is possible to improve workability when detaching the communication unit.

In the present invention, the vehicle body preferably includes a driving unit and a ROPS surrounds the driving unit, the ROPS preferably includes right and left vertical members installed upright at both right and left end portions of the driving unit, and a lateral member is connected upper end portions of the right and left vertical members, and the communication unit is preferably provided between the right and left vertical members.

According to the present configuration, for example, even in a case where a side portion of the vehicle body on a side comes into contact with an obstacle, the communication unit is able to be protected by the ROPS.

In the present invention, the vehicle body preferably includes right and left fenders cover the traveling device, and a connecting member is connected the right and left fenders, and the communication unit is preferably provided on the connecting member.

According to the present configuration, since the connecting member connecting the right and left fenders is a stable member, the communication unit is able to be supported in a stable state without providing a dedicated support member.

In the present invention, the communication unit preferably includes an antenna portion configured to transmit the information on the vehicle body to the outside, and the antenna portion is preferably provided at a position not overlapping with the connecting member in a planar manner.

According to the present configuration, an effect of the connecting member on the communication state of the antenna portion is able to be kept low.

In the present invention, the vehicle body preferably includes a driving unit and a ROPS surrounds the driving unit, the ROPS preferably includes right and left vertical members installed upright at both right and left end portions of the driving unit, and a lateral member is connected upper end portions of the right and left vertical members, and the communication unit is preferably provided on the lateral member.

According to the present configuration, since the lateral member is present at a high position and there is no obstacle around the lateral member, it is possible to improve the communication state of the communication unit.

In the present invention, the vehicle body preferably includes a driving unit having a driving seat, and the communication unit is preferably provided at a position not interfering with a range of work performed by a hand of a driver seated on the driving seat.

According to the present configuration, the human body of the driver is unlikely to affect the communication of the communication unit, and the driver is unlikely to be affected by the communication electromagnetic waves of the communication unit.

In the present invention, the communication unit preferably includes an information acquisition device configured to acquire the information on the vehicle body, and a communication device configured to transmit the information on the vehicle body to an outside, and the communication device preferably vertically overlaps with the information acquisition device while being located above the information acquisition device.

According to the present configuration, the communication device and the information acquisition device are able to be compactly disposed in a planar manner, the information acquisition device is less likely to cause a failure in the communication state of the communication device, and it is possible to improve the communication state of the communication unit.

### Brief Description of Drawings

- Fig. 1: is a right side view of a work vehicle;
- Fig. 2: is a plan view of the work vehicle;
- Fig. 3: is a rear view of the work vehicle;
- Fig. 4: is a plan view illustrating a maximum work range of arms of a driver;
- Fig. 5: is a block diagram illustrating a communication configuration of vehicle body information;
- Fig. 6: is a rear view illustrating an attachment structure of a communication unit;
- Fig. 7: is a bottom view illustrating the attachment structure of the communication unit;
- Fig. 8: is a perspective view illustrating a configuration of the communication unit;
- Fig. 9: is a right side view illustrating another example of the work vehicle according to another embodiment;
- Fig. 10: is a front view illustrating the other example of the work vehicle according to the other embodiment;
- Fig. 11: is a right side view illustrating the other example of the work vehicle according to the other embodiment; and
- Fig. 12: is a front view illustrating the other example of the work vehicle according to the other embodiment.

### Description of Embodiments

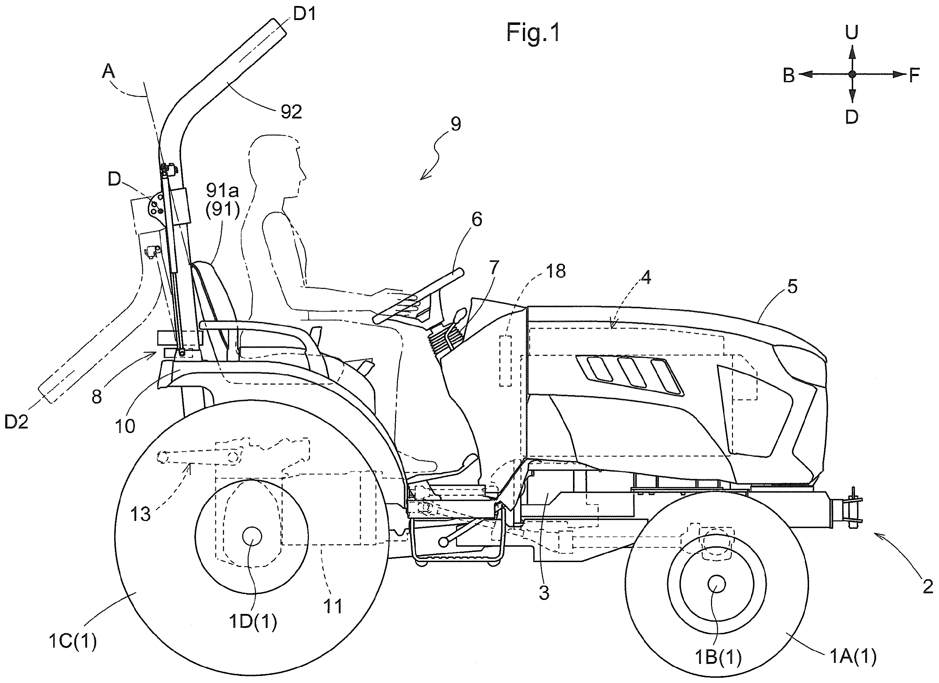

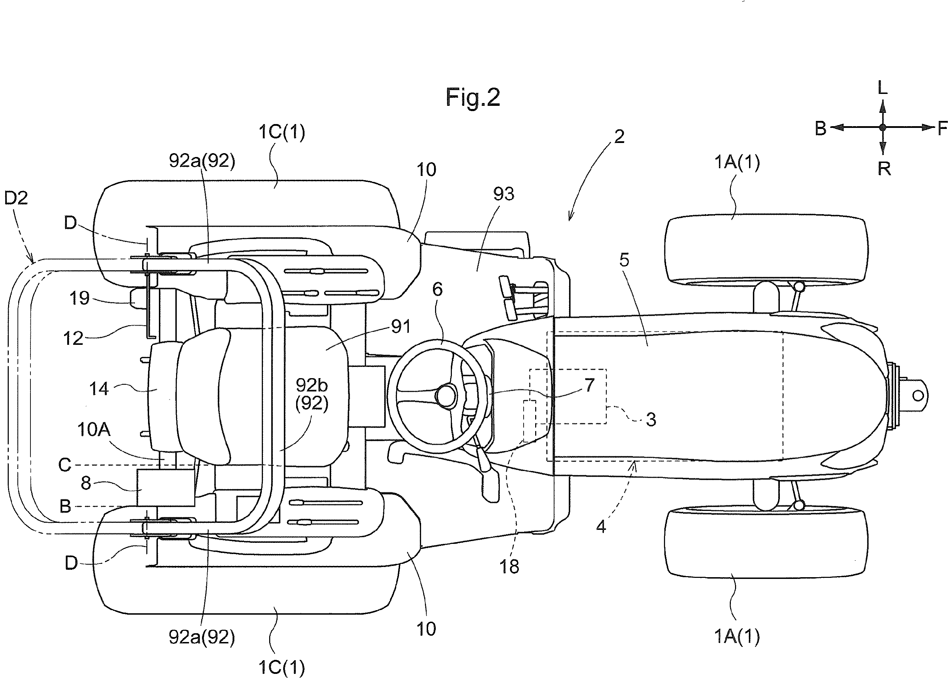

Hereinafter, a tractor, which is an example of a work vehicle according to the present embodiment, will be described based on the description of the drawings. In the description of the present embodiment, a front-rear direction and a right-left direction are described as follows unless otherwise specified. That is, a movement direction (see an arrow F in Figs. 1, 2, 7, 9, and 11) on a forward side during work traveling of the work vehicle of the present embodiment is "forward", a movement direction (see an arrow B in Figs. 1, 2, 7, 9, and 11) on a backward side is "backward", a direction (see an arrow R in Figs. 2, 3, 6, 7, 10, and 12) corresponding to a right side with reference to a forward posture in the front-rear direction is "right", and similarly, a direction (see an arrow L in Figs. 2, 3, 6, 7, 10, and 12) corresponding to a left side is "left". Similarly, a direction corresponding to an upper side (see an arrow U in Figs. 1, 3, 6, 9, 10, 11, and 12) is "up". Similarly, a direction corresponding to a lower side (see an arrow D in Figs. 1, 3, 6, 9, 10, 11, and 12) is "down".

### [Overall Configuration]

As illustrated in Figs. 1 and 2, the work vehicle is an electric tractor that travels by electric power. The work vehicle includes a traveling device 1 and a vehicle body 2 supported by the traveling device 1.

The vehicle body 2 includes a battery 4, an electric motor 3 that is driven by electric power supplied from the battery 4 and drives the traveling device 1, a transmission 11 that transmits power transmitted from the electric motor 3 to the traveling device 1 by shifting the power, a hood 5 that is provided at a front portion of the vehicle body 2 and accommodates the battery 4, and a driving unit 9 that is provided behind the hood 5 and is boarded by a driver. The electric motor 3 is provided below the hood 5, and the transmission 11 is provided below the driving unit 9. An inverter that converts a direct current from the battery 4 into an alternating current is provided in the vicinity of the battery 4, and is not particularly illustrated.

The traveling device 1 includes right and left front wheels 1A, a front axle 1B connecting the right and left front wheels 1A, right and left rear wheels 1C, and a rear axle 1D connecting the right and left rear wheels 1C. The front wheels 1A are drivable and steerable. The rear wheels 1C are drivable. Right and left fenders 10 for covering the rear wheels 1C are provided laterally adjacent to the right and left sides of the driving unit 9. On a rear side of a driving seat 91, rear end portions of the right and left fenders 10 are connected to each other by a connecting member 10A extending along the vehicle body right-left direction. The connecting member 10A is a metal frame and has high rigidity as compared with a resin material or the like.

A three-point link type link mechanism 13 to which a work device (not illustrated) such as a rotary tillage device is connected is provided at a rear portion of the vehicle body 2. The work device is driven by being connected to a PTO shaft (not illustrated) that outputs the power shifted by the transmission 11, and is able to be lifted and lowered by the link mechanism 13.

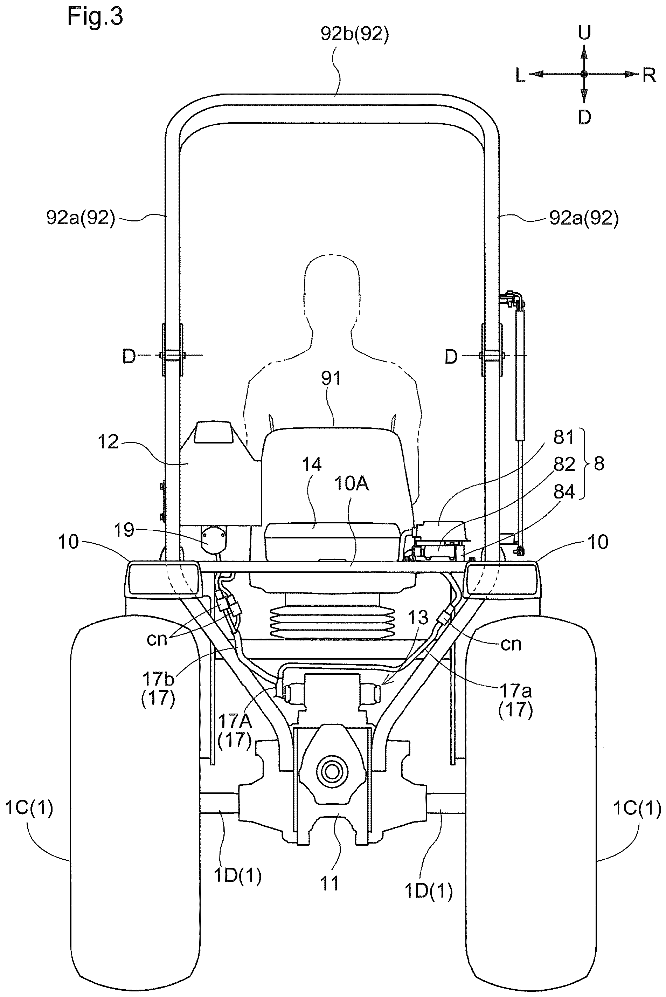

As illustrated in Figs. 2 and 3, the vehicle body 2 is provided with a control device 18 and a communication unit 8 that is connected to the control device 18 via a wire harness 17 and transmits information on the vehicle body 2 accumulated in a memory (not illustrated) of the control device 18 to the outside. The control device 18 includes a microprocessor having a central processing unit (CPU), an electrically erasable programmable read-only memory (EEPROM), and the like. For example, the control device 18 is an electric control unit (ECU). The control device 18 acquires signals output from various sensors provided in the traveling device 1 or the vehicle body 2 and controls the vehicle body 2. The communication unit 8 acquires necessary information from the memory. The information on the vehicle body 2 acquired by the communication unit 8 and transmitted to the outside includes, for example, a harvest amount per farm field, a state of soil, a vehicle speed, a road travel distance, a work travel distance, a work device driving time, a driving time of the electric motor 3, and the like.

An on-vehicle type fault diagnosis device (hereinafter, abbreviated as "OBD") is constructed in the control device 18, and an OBD port 19 is connected to the control device 18 via the wire harness 17, and an external diagnosis device is able to be connected to the OBD port 19 to read a diagnostic trouble code (DTC).

### [Driving Unit]

As illustrated in Figs. 1 and 2, the driving unit 9 includes a steering handle 6 that steers the traveling device 1 (front wheels 1A), a handle post 7 that supports the steering handle 6, the driving seat 91 on which a driver sits, a roll-over protection structure (ROPS) 92 that is installed upright in the vicinity of a rear portion (seat back 91a) of the driving seat 91, and a floor portion 93 on which a foot of the driver sitting on the driving seat 91 is placed. The control device 18 is accommodated in the handle post 7. The driving unit 9 is not provided with a cabin that covers the driving unit 9.

In Fig. 1, a one-dot chain line A is a virtual line extending along a rear surface of the seat back 91a in the driving seat 91, and the ROPS 92 rise from a position forward of the rear surface of the seat back 91a. The ROPS 92 has right and left vertical members 92a that are installed upright on the fender 10, and a lateral member 92b that is connected upper end portions of the right and left vertical members 92a. A proximal end portion of the ROPS 92 is connected to the transmission 11. The ROPS 92 is rotatable about a rotation axis D extending in the vehicle body right-left direction at a use position D1 and a storage position D2. A two-dot chain line D2 in Figs. 1 and 2 indicates the ROPS 92 at the storage position.

At the use position D1, the communication unit 8 is provided at a position overlapping with the ROPS 92 in the vehicle body right-left direction. Accordingly, for example, even in a case where a side portion of the vehicle body 2 on a side comes into contact with an obstacle, it is possible to suppress the communication unit 8 from coming into contact with the obstacle by the ROPS 92.

In the storage position D2, the lateral member 92b of the ROPS 92 is located behind the communication unit 8. Accordingly, for example, even in a case where the side portion of the vehicle body 2 on the rear side comes into contact with the obstacle, it is possible to suppress the communication unit 8 from coming into contact with the obstacle by the ROPS 92.

In a rear portion of the driving unit 9, the communication unit 8, a toolbox 14 that accommodates a tool or the like, and a license plate 12 that displays a number plate or the like are provided in this order side by side in the vehicle body right-left direction in a plan view.

### [Communication Unit]

As illustrated in Figs. 2 and 3, the communication unit 8 is supported by the connecting member 10A. The communication unit 8 includes a communication device 81 that transmits information on the vehicle body 2 to the outside of the vehicle body, an information acquisition device 82 that acquires information on the vehicle body 2, and a support member 84.

The communication unit 8 is provided at a position where at least a part of the communication unit 8 is exposed to the outside from the vehicle body 2. In addition, the communication unit 8 is provided at a position where a part of the vehicle body 2 does not overlap with the communication unit 8 from above. Specifically, the communication unit 8 is provided at a position that does not overlap with the ROPS 92 or the driving seat 91 in a plan view. In other words, a part (the ROPS 92 or the driving seat 91) of the vehicle body 2 is not located above the communication unit 8.

In Fig. 2, a broken line B is a virtual line extending forward and backward along an outer end portion of the communication unit 8 in the vehicle body right-left direction, and a broken line C is a virtual line extending forward and backward along an outer end portion of the driving seat 91 in the vehicle body right-left direction. In the vehicle body right-left direction, the virtual line B is located outward of the vehicle body with respect to the virtual line C. That is, the outer end portion of the communication unit 8 in the vehicle body right-left direction is located outward of the vehicle body with respect to the outer end portion of the driving seat 91 in the vehicle body right-left direction. Further, the communication unit 8 is provided on the outer side of the vehicle body with respect to the driving seat 91 in the vehicle body right-left direction as a whole. In other words, the entire communication unit 8 is provided outward of the vehicle body with respect to the driving seat 91 in the vehicle body right-left direction.

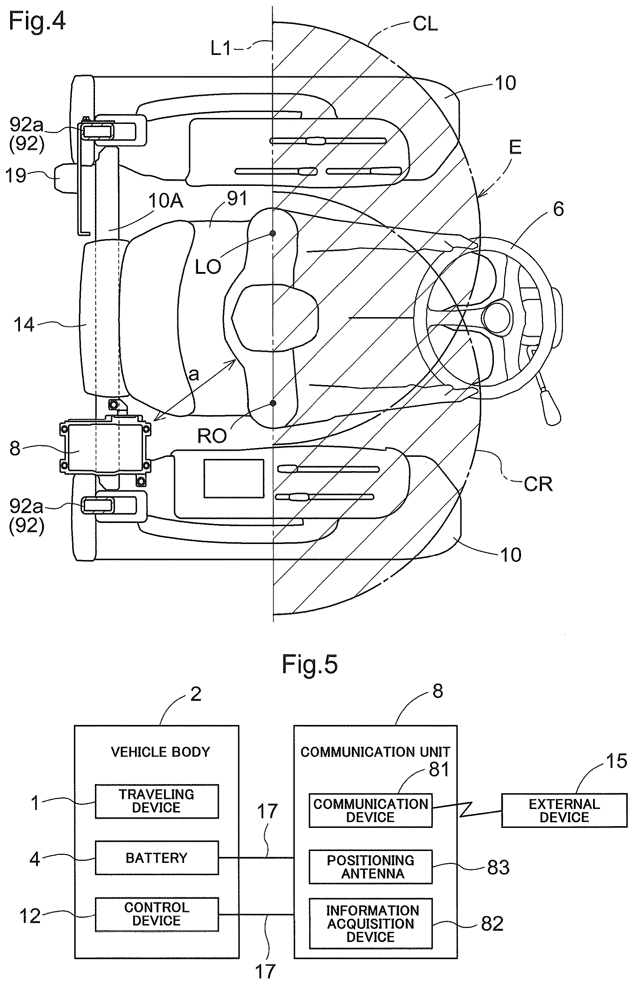

Since the communication unit 8 generates electromagnetic waves, it is necessary to appropriately set a distance between the installation position of the communication unit 8 and the driver. In Fig. 4, a distance a indicates a distance between the communication unit 8 and the head of the driver. It is preferable that the distance a is greater than 20 cm (centimeter).

In addition, in Fig. 4, a region indicated by E is a maximum work range of the right and left arms of the driver on a horizontal plane. The maximum work range E indicates a range that is able to be reached by the hand of the driver in a plan view on the premise that the shoulder of the driver seated on the driving seat 91 is fixed. The maximum work range E is a region surrounded by a line L1 extending in the vehicle body right-left direction through centers RO and LO of the right and left shoulders of the driver in the vehicle body front-rear direction, a semicircle CR indicating a range reachable by the right hand with the right shoulder joint (center RO) of the driver as a center, and a semicircle CL indicating a range reachable by the left hand with the left shoulder joint (center LO) of the driver as a center. The communication unit 8 is provided outside the range of the maximum work range E. That is, the communication unit 8 is provided at a position that does not interfere with the range of work performed by the hand of the driver who is seated on the driving seat 91.

### [Wire Harness]

As illustrated in Figs. 3 and 5, the communication unit 8 is connected to the battery 4 and the control device 18 via the wire harness 17. The wire harness 17 is used for power supply from the battery 4 and signal communication between the communication unit 8 and the control device 18.

The wire harness 17 includes a main harness 17A, a branch harness 17a extending to a communication unit 8 side, and a branch harness 17b extending to an OBD port 19 side.

The main harness 17A extends from the control device 18 to a space between the transmission 11 and the connecting member 10A through below the driving unit 9. The main harness 17A is branched into the branch harness 17a on the communication unit 8 side and the branch harness 17b on the OBD port 19 side in the space between the transmission 11 and the connecting member 10A. The wire harness 17 extending from the communication unit 8 and the wire harness 17 extending from the OBD port 19 are attachable and detachable to and from the branch harness 17a and the branch harness 17b via a connector cn below the communication unit 8 and the OBD port 19.

The communication unit 8 transmits and receives information on the vehicle body 2 to and from an external device 15 via the Internet network or the like. The external device 15 is, for example, a server or the like installed in a manufacturer (manufacturing company) or a dealer (sales and maintenance company), and is provided at a remote location away from the vehicle body 2.

### [Support Member]

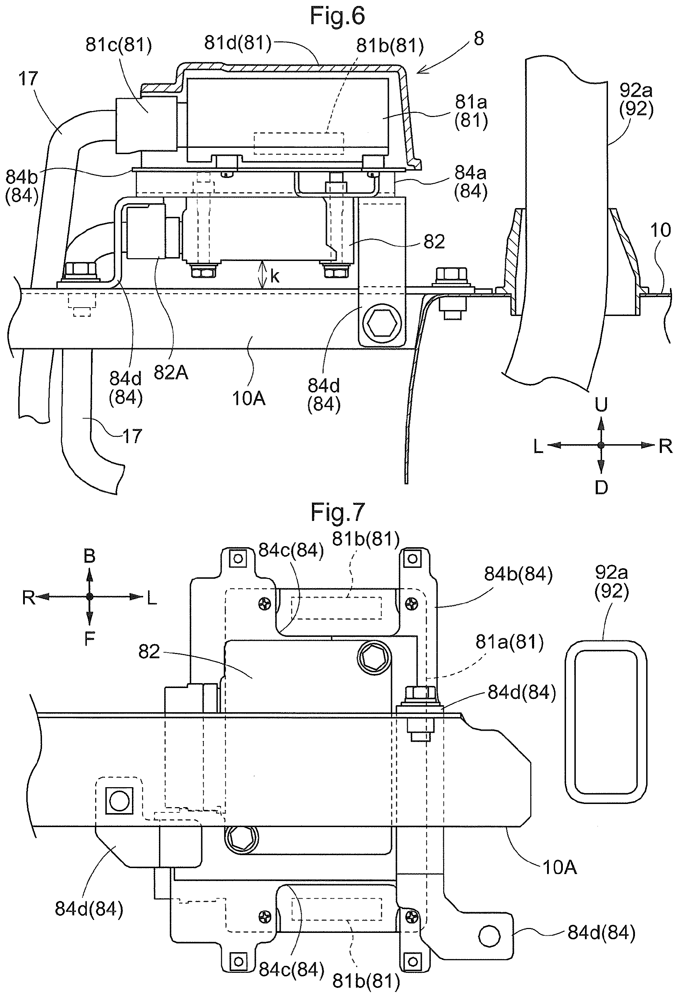

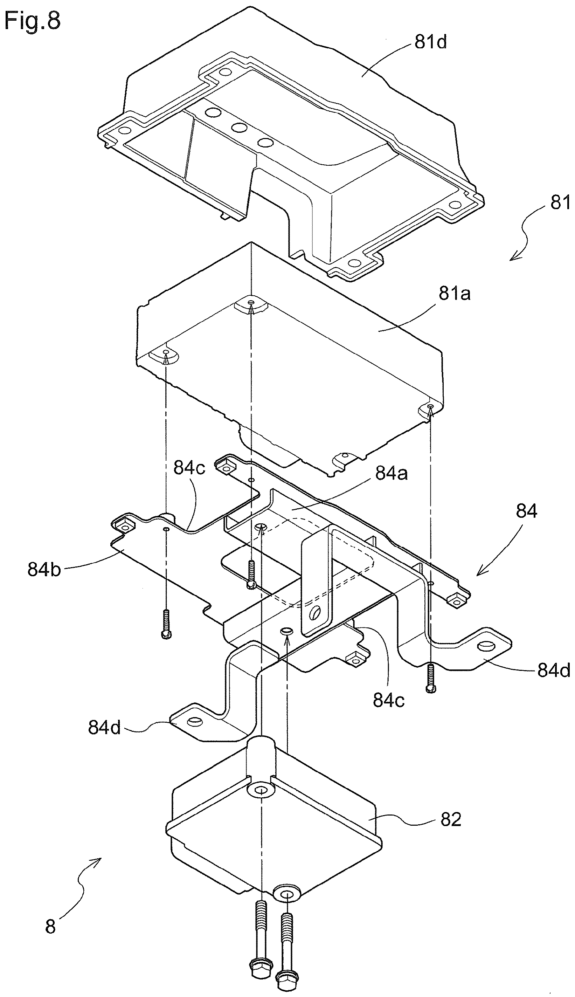

As illustrated in Figs. 6 and 8, the support member 84 includes an intermediate member 84a, an attachment plate 84b, and a plurality of support legs 84d. The communication unit 8 is supported by the support member 84 at the connecting member 10A.

The plurality of support legs 84d are fixed to the connecting member 10A and the fender 10 with bolts or the like. The right support leg 84d is formed by bending a metal plate material, and is connected to an upper surface of the right fender 10 and a side surface of the connecting member 10A by bolts or the like. The left support leg 84d is formed by bending a metal plate material, and is connected to an upper surface of the connecting member 10A by bolts or the like.

The intermediate member 84a is provided between the support leg 84d and the attachment plate 84b. The intermediate member 84a is formed of a steel plate formed in a U-shape and is connected to an upper portion of the support leg 84d. The information acquisition device 82 is connected to a lower surface of the intermediate member 84a by bolts or the like.

The attachment plate 84b is formed of a metal plate material and is connected to an upper portion of the intermediate member 84a. The communication device 81 is connected to an upper surface of the attachment plate 84b by bolts or the like.

### [Communication Device]

As illustrated in Figs. 6 and 8, the communication device 81 includes a housing 81a, an antenna portion 81b, a connector portion 81c, and a cover member 81d. The communication device 81 is a direct communication unit (DCU).

The housing 81a is connected to the upper surface of the attachment plate 84b by bolts or the like. The housing 81a has a box shape having an upper surface, a side surface, and a lower surface. The antenna portion 81b is accommodated in the housing 81a.

The wire harness 17 is attachable and detachable to and from the connector portion 81c. The connector portion 81c is formed on a side surface of the housing 81a. The connector portion 81c is formed to face the right-left center of the vehicle body 2. Accordingly, the wire harness 17 is attached and detached to and from a right-left center side of the vehicle body 2.

Therefore, it is possible to suppress a part of the wire harness 17 from interfering with the rear wheel 1C or the like that is located outside the communication unit 8 in the vehicle body right-left direction.

The cover member 81d is formed of a synthetic resin and covers the upper surface and the side surface of the housing 81a from above. Accordingly, it is possible to suppress the housing 81a from being wet with rainwater or the like. The cover member 81d is connected to the metal attachment plate 84b by bolts or the like.

### [Information Acquisition Device]

As illustrated in Figs. 6 and 8, the information acquisition device 82 has a box shape having an upper surface, a side surface, and a lower surface, and a connector portion 82A to which the wire harness 17 is attachable and detachable is formed on the side surface. The information acquisition device 82 temporarily accumulates the information on the vehicle body 2 and transmits the information to the communication device 81. The information acquisition device 82 is connected to an in-vehicle network such as a controller area network (CAN) or a flex ray via the wire harness 17.

The information acquisition device 82 transmits the information on the vehicle body 2 to the communication device 81.

### [Positioning Antenna]

As illustrated in Fig. 5, a positioning antenna 83 is disposed inside the communication device 81, and measures the position of the vehicle body 2 by using a global positioning system (GPS) which is an example of a global navigation satellite system (GNSS). The positioning antenna 83 receives position information from the satellite and measures the position of the vehicle body 2 based on the received position information. The position information detected by the positioning antenna 83 is transmitted to the external device 15 by the communication device 81 as the information on the vehicle body 2 together with other information.

The position information measured by the positioning antenna 83 includes a positioning error caused by the position of the positioning antenna 83. The communication unit 8 does not perform correction for eliminating the positioning error.

As illustrated in Fig. 6, the communication device 81 vertically overlaps with the information acquisition device 82 while being located above the information acquisition device 82. The communication device 81 is fixed to an upper portion of the intermediate member 84a of the support member 84, and the information acquisition device 82 is fixed to a lower portion of the intermediate member 84a of the support member 84. That is, the information acquisition device 82 is provided at a position facing the communication device 81 with the support member 84 interposed therebetween. The support member 84 provides an interval k between the communication unit 8 and the connecting member 10A. Accordingly, a configuration is provided such that the air is able to flow between the communication unit 8 and the connecting member 10A, and the temperature rise of the communication unit 8 is able to be suppressed.

Fig. 7 is a bottom view illustrating an attachment structure of the communication unit 8. As illustrated in Fig. 7, the antenna portion 81b is provided at a position that does not overlap with the connecting member 10A and the support member 84 in a planar manner. Specifically, the attachment plate 84b is formed with a recess portion 84c, the antenna portion 81b is provided above the recess portion 84c, and the attachment plate 84b is configured not to be located below the antenna portion 81b. Therefore, even in a case where the connecting member 10A or the attachment plate 84b is made of metal, the communication state of the antenna portion 81b is less likely to be affected by the connecting member 10A or the attachment plate 84b.

### [Other Embodiments]

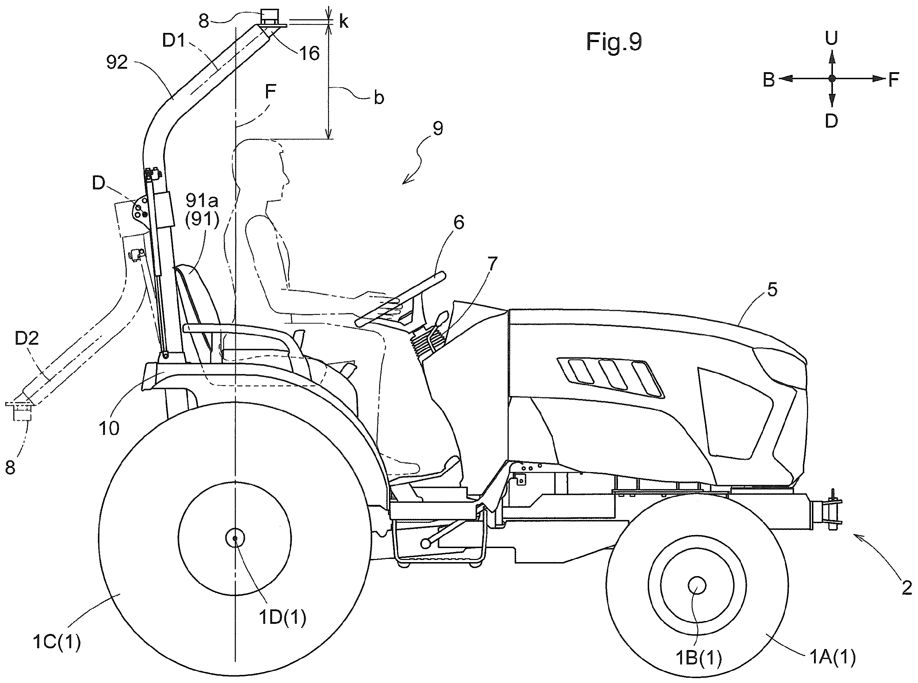

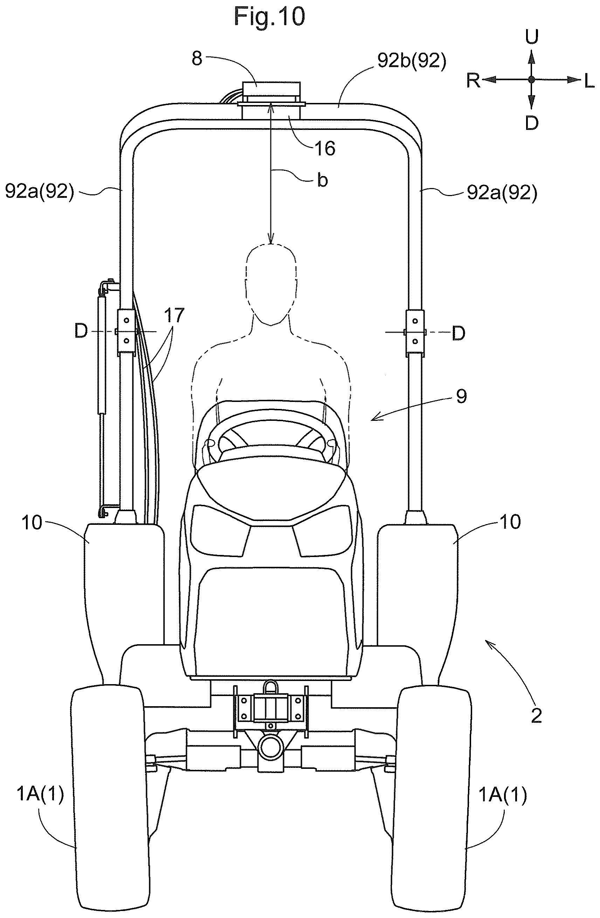

The present invention may be configured as the following other embodiments in addition to the above-described embodiments. In the following description of the other embodiments, the same configurations as those of the embodiment are denoted by the same reference numerals and signs as those of the embodiments.
(1) As illustrated in Figs. 9 and 10, the communication unit 8 may be provided on the lateral member 92b of the ROPS 92. Specifically, the communication unit 8 is attached to the lateral member 92b by an attachment bracket 16. In addition, the communication unit 8 is provided at a right-left center position of the lateral member 92b. As in the above-described embodiments, the interval k is provided between the communication unit 8 and the attachment bracket 16. In addition, as in the above-described embodiments, it is preferable that the distance b between the head of the driver and the communication unit 8 is greater than 20 cm.

A one-dot chain line F in Fig. 9 is a virtual line that passes through the axis center of the rear axle 1D and extends in the up-down direction of the vehicle body 2. The communication unit 8 is provided forward of the virtual line F in the vehicle body front-rear direction. That is, the communication unit 8 is provided forward of the vehicle body 2 with respect to the rear axle 1D.

A two-dot chain line D2 in Fig. 9 indicates the ROPS 92 in the storage position. As illustrated in Fig. 9, the lateral member 92b is provided at a height substantially equal to an upper end portion of the rear wheel 1C at the storage position D2. Accordingly, the communication unit 8 is able to be moved to a height at which maintenance is easily performed.

The wire harness 17 connected to the communication unit 8 is laid to pass through the inside of the ROPS 92 from an opening (not illustrated) provided in the ROPS 92 or the like. The wire harness 17 is led out to the outside of the ROPS 92 from an opening (not illustrated) or the like provided above the rotation axis D.

The present invention is not limited to this, and the wire harness 17 may be laid along the outer surface of the ROPS 92 without passing through the inside of the ROPS 92. In this case, the outer surface of the ROPS 92 may be the side surface of the vehicle body 2 on the right-left center side in the ROPS 92. Accordingly, the wire harness 17 does not interfere with the rear wheel 1C or the like located on the outer side of the vehicle body with respect to the ROPS 92 in the vehicle body right-left direction. The communication unit 8 may be provided in the vertical member 92a instead of the lateral member 92b. The ROPS 92 may be installed upright in the vicinity of the front portion of the driving unit 9 without being installed upright in the vicinity of the rear portion (driving seat 91) of the driving unit 9.

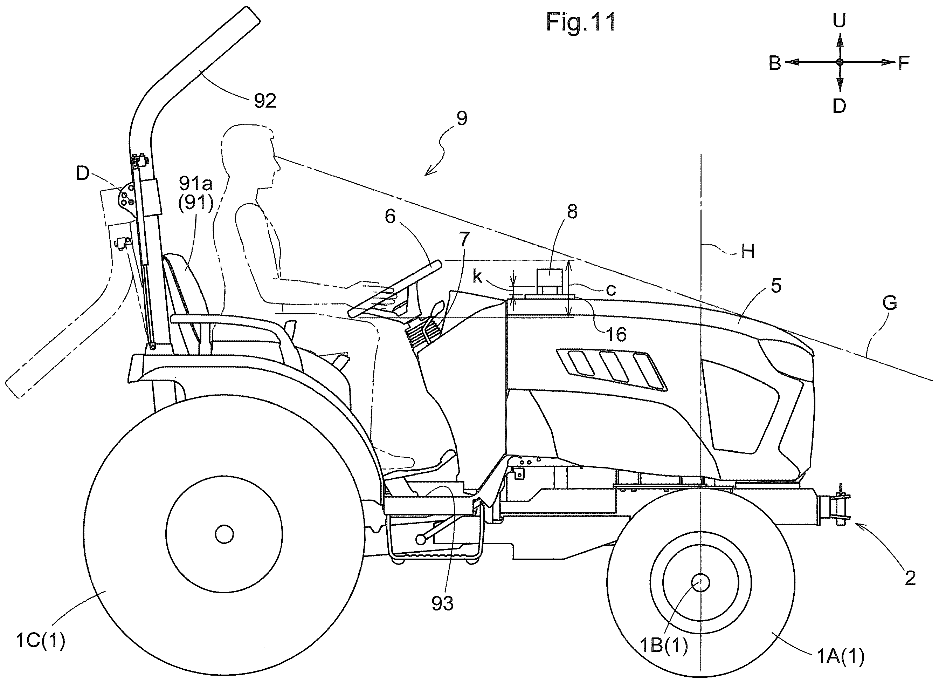

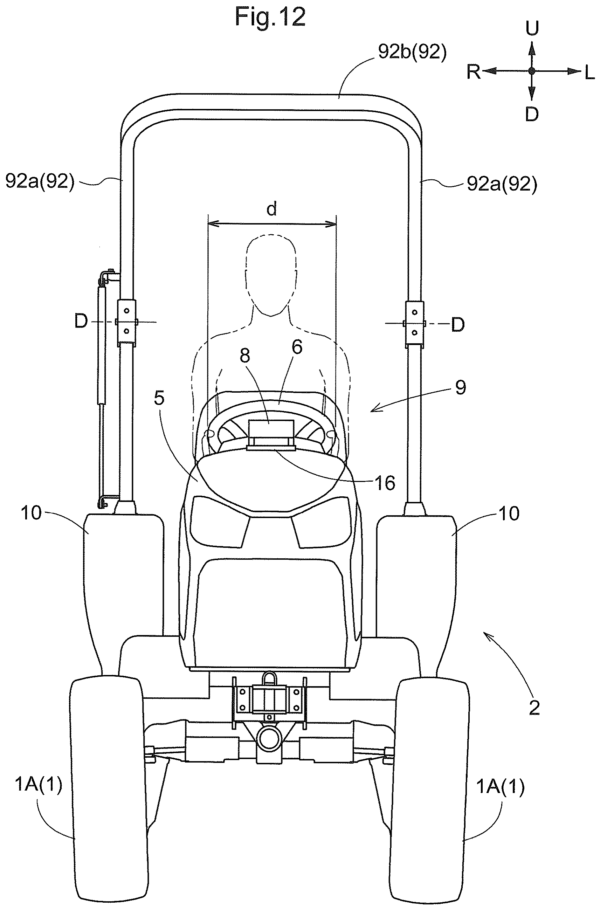

(2) As illustrated in Figs. 11 and 12, the communication unit 8 may be provided in the hood 5. Specifically, the communication unit 8 is attached to the upper surface of the hood 5 by the attachment bracket 16. The communication unit 8 is provided at a position of the right-left center of the hood 5. As in the above-described embodiments, the interval k is provided between the communication unit 8 and the attachment bracket 16. A distance c in Fig. 11 is a distance between an upper end portion and a lower end portion of the steering handle 6. The communication unit 8 is disposed to be within a range of the distance c. That is, the communication unit 8 is located below the upper end portion of the steering handle 6.

A one-dot chain line G in Fig. 11 is a virtual line indicating a field of view of the driver seated on the driving seat 91. The communication unit 8 is located below the virtual line G. Accordingly, the communication unit 8 does not block the field of view of the driver.

A one-dot chain line H in Fig. 11 is a virtual line extending in the up-down direction of the vehicle body 2 through the axis center of the front axle 1B. The communication unit 8 is provided rearward of the vehicle body with respect to the virtual line H. That is, the communication unit 8 is provided rearward of the vehicle body 2 with respect to the front axle 1B. Here, the communication unit 8 is more likely to obstruct the field of view of the driver as the communication unit 8 is provided closer to the front side of the hood 5 in the vehicle body front-rear direction. That is, the communication unit 8 is able to be provided at a position where the field of view of the driver is not obstructed.

A distance d in Fig. 12 indicates a distance between right and left end portions of the steering handle 6. The communication unit 8 is disposed to be within a range of the distance d. That is, the communication unit 8 is provided at a position of the right-left center of the hood 5 with respect to the right and left end portions of the steering handle 6. As a result, a right-left width of the communication unit 8 is not excessively large, and the communication unit 8 does not obstruct the field of view of the driver.
(3) Although not particularly illustrated, the ROPS 92 may include a connection frame that connects up-down middle portions of the right and left vertical members 92a to the ROPS 92 below the lateral member 92b, and the communication unit 8 may be provided in the connection frame.
(4) Although not particularly illustrated, the communication unit 8 may be provided on the upper surface of the floor portion 93 while the other members are not located above the communication unit 8.
(5) Although not particularly illustrated, the communication unit 8 may be provided on the handle post 7 while the other members are not located above the communication unit 8.
(6) Although not particularly illustrated, the communication unit 8 may be provided on the upper surface of the fender 10 while the other members are not located above the communication unit 8.
(7) Although not particularly illustrated, the work vehicle may be a cabin machine including a cabin that covers the driving unit 9. In this case, it is preferable that the communication unit 8 is provided in a roof portion of the cabin.
(8) The external device 15 is not limited to the one illustrated in the above-described embodiments, and may be a tablet PC, a smartphone, or a mobile phone disposed in the driving unit 9 as long as wireless communication with the communication unit 8 is possible.
(9) **In** the above-described embodiments, an example in which the entire information acquisition device 82 overlaps with the communication device 81 in a planar manner is illustrated.

The present invention is not limited to this, and a configuration in which a part of the information acquisition device 82 overlaps with the communication device 81 in a planar manner or a configuration in which the information acquisition device 82 does not overlap with the communication device 81 in a planar manner may be adopted.
(10) In the above-described embodiments, the electric tractor that travels using the battery 4 and the electric motor 3 is disclosed. The present invention is not limited to this, and a tractor including an engine (not illustrated) may be used.
(11) In the above-described embodiments, the tractor that travels with driving by the driver is disclosed. The present invention is not limited to this, the work vehicle may be a tractor that is able to travel without a driver.
(12) **In** the above-described embodiments, the harvest amount per farm field, the state of soil, the vehicle speed, the road travel distance, the work travel distance, the work device driving time, the driving time of the electric motor 3, and the position information are exemplified as the information on the vehicle body 2 handled by the communication unit 8. However, the present invention is not limited to this example. The communication unit 8 may be in a state of not transmitting the position information as the information on the vehicle body 2.
(13) The configurations disclosed in the above-described embodiments (including the other embodiments, the same applies hereinafter) are able to be applied in combination with the configurations disclosed in other embodiments as long as there is no contradiction, and the embodiments disclosed in the present specification are merely examples, and the embodiments of the present invention are not limited thereto and are able to be appropriately modified without departing from the object of the present invention.

### Industrial Applicability

The present invention is not limited to the tractor, and is able to be applied to a rice transplanter, a combine harvester, a harvester other than combine harvester, a grass cutter, a construction machine, and the like as long as the work vehicle includes the communication unit that transmits information on the vehicle body to the outside.

### Description of Reference Numerals

- 1: traveling device
- 2: vehicle body
- 4: battery
- 8: communication unit
- 81: communication device
- 81b: antenna portion
- 82: information acquisition device
- 9: driving unit
- 91: driving seat
- 10: fender
- 10A: connecting member
- 12: control device
- 17: wire harness
- 17A: main harness (wire harness)
- 17b: branch harness (wire harness)
- 17b: branch harness (wire harness)
- 92: ROPS
- 92a: vertical member
- 92b: lateral member
- cn: connector

## Claims

1. A work vehicle, comprising:
- a traveling device;
- a vehicle body supported by the traveling device; and
- a communication unit configured to transmit information on the vehicle body to an outside,
wherein the communication unit is provided at a position where at least a part of the communication unit is exposed from the vehicle body to the outside.

2. The work vehicle according to claim 1, wherein the communication unit is provided at a position where the vehicle body not overlapping with the communication unit from above.

3. The work vehicle according to claim 1 or 2, wherein
- the vehicle body includes a driving unit having a driving seat, and
- the communication unit is provided rearward of the driving seat.

4. The work vehicle according to claim 3, wherein an outer end portion of the communication unit is located outward of an outer end portion of the driving seat in a vehicle body right-left direction.

5. The work vehicle according to claim 3 or 4, further comprising:
- a control device provided in the driving unit; and
- a wire harness configured to connect the control device and the communication unit, wherein
- the control device is provided forward of the communication unit,
- the wire harness is extended from the control device to the rear side of the driving seat through below the driving unit, and is connected to the communication unit,
- a connector is provided in a portion of the wire harness that is located on the rear side of the driving unit, and the wire harness is separable into a portion on a control device side and a portion on a communication unit side.

6. The work vehicle according to any one of claims 1 to 5, wherein
- the vehicle body includes
- a driving unit, and
- a ROPS surrounds the driving unit,
- the ROPS includes
- right and left vertical members installed upright at both right and left end portions of the driving unit, and
- a lateral member is connected upper end portions of the right and left vertical members, and
- the communication unit is provided between the right and left vertical members.

7. The work vehicle according to any one of claims 1 to 5, wherein
- the vehicle body includes
- right and left fenders cover the traveling device, and
- a connecting member is connected the right and left fenders, and
- the communication unit is provided on the connecting member.

8. The work vehicle according to claim 7, wherein
- the communication unit includes an antenna portion configured to transmit the information on the vehicle body to the outside, and
- the antenna portion is provided at a position not overlapping with the connecting member in a planar manner.

9. The work vehicle according to any one of claims 1 to 5, wherein
- the vehicle body includes
- a driving unit, and
- a ROPS surrounds the driving unit,
- the ROPS includes
- right and left vertical members installed upright at both right and left end portions of the driving unit, and
- a lateral member is connected upper end portions of the right and left vertical members, and
- the communication unit is provided on the lateral member.

10. The work vehicle according to any one of claims 1 to 9, wherein
- the vehicle body includes a driving unit having a driving seat, and
- the communication unit is provided at a position not interfering with a range of work performed by a hand of a driver seated on the driving seat.

11. The work vehicle according to any one of claims 1 to 9, wherein
- the communication unit includes
- an information acquisition device configured to acquire the information on the vehicle body, and
- a communication device configured to transmit the information on the vehicle body to the outside, and
- the communication device vertically overlaps with the information acquisition device while being located above the information acquisition device.
